# EUROPEAN PATENT APPLICATION

(11) **EP 1 623 964 A1**
(43) Date of publication of application: **08.02.2006**
(21) Application number: 04466022.3
(22) Date of filing: 05.08.2004
(51) Int. Cl.: C03C 17/38

(54) **Reflective product and method of its production**

(71) Applicant: Ego 93, s.r.o., 530 01 Chrudim (CZ)
(72) Inventor: Molnar, Martin, 533 52 Stare Hradiste (CZ)
(74) Representative: Skoda, Milan

(57) **Abstract**

Reflective product, especially reflective product consisting of the base material formed by glass or any other substrate and reflective-effect-forming metal coat. The metal coat, treated by a solution containing 0.00001 to 80 weight % of the agent which contains mixture of ions of bivalent tin and organic substance whose molecules contain at least one atom of nitrogen and/or sulphur, and 20 to 99.99999 weight % of demineralised water, is covered by a protective layer. Method of production of the reflective product, when the metal coat is put into 0.05- to 15- minute contact with the agent-containing solution. After the period of contact expires, the agent-containing solution is removed and protective layer is applied on the obtained surface layer.

## Description

### Field of the invention

The invention deals with a reflective product and method of its production, especially the reflective product in which reflective metal coat is applied on a base mate rial formed by glass or another, mostly transparent substrate.

### Base of the invention

At present, many products with reflective layer are known. This layer is mostly formed by a metal coat which is applied on base material formed by glass or any other substrate. The metal coat can be applied as a pattern to form a decoration but it is most widely used on glass base as a continuous reflective coat. The reflective coat can be so fine that it forms a transparent layer. Glass plates with transparent reflective coats are used as solar radiation screening plates or plates with low infra-red light emission. Alternatively, the coat can be fully reflective, thus forming a mirror coat. Such mirror can be either flat or curved.

Reflective metal coats, made e.g. from glass, are susceptible to be attacked by atmospheric impurities, which results in loss of the silver layer gloss so that the requ ired optical properties are lost. For this reason, protective layers are applied on such silver layer and the character of the protective layer depends on the required properties of the coated base and price.

For example, transparent layers of corroding metals (among which silver can be included as well) that are used for decorative solar-radiation-screening coats can be protected against corrosion by coating by one or several transparent layers of a metal oxide. Such layers are often produced by vacuum application. Both main and protective layers are usually produced (to prevent damage of the main layer) in the same equipment. Such method of production is described e.g. in WO 0109051 where the method of magnetron sputtering is used. The layer of the substrate is adjusted at first in a microwave discharge and then the decorative coat is applied on it without substrate heating. The decorative coat can be covered by a protective transparent layer whose thickness controls the final colour shade. Glass adjusted decoratively according to the mentioned patent has a decorative coat from e.g. stainless steel, brass, or aluminium bronze or another metal that is covered by a transparent protective layer. Production of such protective layers is very expensive. Mirrors that are silvered on their front side can be protected in this way as well.

Mirrors that are silvered on their back side can be protected by one or more non-transparent layers as optical properties of the mirror's back side are of no importance and in some methods of mirror positioning, this side is not visible.

According to classical methods, mirrors production consists in sensitization of the glass plate and application of silvering solution on it to form a silver reflective layer. This silver layer is covered by a protective layer of copper which is protected by a protective coat, mostly some paint. The purpose of the copper layer application is to delay the loss of silver layer gloss. The copper layer itself is protected against abrasion and corrosion by a layer of paint. However, the main purpose of the copper layer is to ensure adhesion of the protective paint to the silver layer as protective paints adhere badly to the silver layer that is formed by electroless chemical reduction. Therefore, this silver layer must be covered by a copper layer to which the special paints used for mirrors protection adhere well. The best protection against the copper layer corrosion is ensured by lead-pigments-containing paints. Unfortunately, lead pigments are toxic and their use is quite unsuitable due to environmental issues.

The above described methods of reflective layers production are used mainly for production of various types of mirrors. These production processes usually run continuously. Glass passes on a conveyor belt through individual zones where the surface of glass is treated and finished mirrors are taken away at the end of the line.

Glass plates are put on the line and mechanically polished by brushes and polishing paste. The plate is then washed and comes to a zone where it is activated, mostly by tin dichloride solution. This phase is sometimes combined with spraying of other metals chlorides. Activated glass is thoroughly washed and silvering solutions are applied during passage through the silvering chamber. Silver is deposited in a specific accurate time that is determined by the speed of the belt and its length.

Then the copper layer is applied, especially in small facilities. However, there are more modern solutions. For example, the silver layer is washed by demineralised water and than treated with a slightly acidified solution of ions - bivalent tin (Sn²⁺) is best. After it is washed by demineralised water again, surface is contacted with silane, e.g. by spraying of diluted solution of gamma-aminopropyltriethoxysilane. After some time of treatment, silane solution is washed off by demineralised water and the protective paint can be then applied after air drying. The use of Sn²⁺ and silane will ensure good adhesion of the protective paint to the silver layer. If the mentioned operation is used, the protective paint may contain lowered amount of lead pigments while retaining good protective properties. Adhesion of surface treated in this way is much higher than adhesion of the copper layer. This method is described in US 5240776.

In principle, organization of individual layers can be divided to copper-using system where a thin layer of tin is applied usually on glass (silicon) followed by the main silver layer, copper interlayer and protective paint layer, and to non-copper system where a thin layer of tin is applied on glass (silicon) followed by the main silver layer, thin tin interlayer and silane layer, enabling good adhesion of the paint layer.

Disadvantages of the actual systems follow from the above described facts. Vacuum-using methods are very expensive due to the production equipment requirements and their use is limited to products of smaller size.

Disadvantages of the copper layer using systems are obvious as well. It is especially high consumption of expensive copper, necessity to trap copper from waste water, passage of some Cu²⁺ ions to the waste water despite all effort made, necessity to use protective lead-pigments-containing paints, and great number of washings by demineralised water.

High price of Sn²⁺ solution, and especially of silane, great number of washes by demineralised water and blocking of a part of production line for the processes of application of working Sn²⁺ and silane solutions and their washing off belong to the greatest disadvantages of the method that uses Sn²⁺ and silane layer.

The aim of the invention is, therefore, to find such organization of layers of a reflective product and method of formation of these surface layers that will be less expensive, will not require a great number of washes (thus a great consumption of quite expensive demineralised water), will not contaminate waste waters and will enable the use of protective paints without lead pigments content. The aim of the invention also is to increase productivity of labour and/or the possibility to extend the reaction zone of silver deposition on the mirrors production line, which will enable, for example, some increase of speed of the whole line, thus increase of production productivity.

### Detailed description of the invention

To a large extent, the given shortcomings are removed and the targets are met by the reflection product that consists of base material formed by glass or any other substrate, and metal coat with reflective effect. The metal coat, treated with 0.00001 to 80 weight % solution of an agent that contains mixture of ions of bivalent tin and organic substance whose molecules contain at least one atom of nitrogen and/or sulphur, and 20 to 99.99999 weight % of demineralised water, is covered by a protective coat.

The ions of bivalent tin are in form of chloride and/or sulphate.

The agent acts in the following way: part of its molecule formed by the said nitrogen and/or sulphur will form a bond with the metal layer which covers the processed object. Part of the molecule has also the ability to ensure adhesion of subsequent protective layer. Thus adhesive covering layer is formed on the metal surface of the object and enables subsequent application of paint without the necessity of copper interlayer formation or use of paint with lead pigments.

The agent preferably contains 10 to 60 weight % of bivalent tin-containing substance, 1 to 5 weight % of organic substance, 10 to 30 weight % of organic solvent, 1 to 20 weight % of HCl, and 4 to 78 weight % of demineralised water.

The preferred organic substance is benztriazole C₆H₄NHN:N or dicyclohexylammonium nitrite or morpholine or cyclohexylammonium carbonate or N-dimethylmorpholine or phenidone or ethylenediamine or propylenediamine or mercaptobenztriazole or N-methylmorpholine.

Use of benztriazole C₆H₄NHN:N or N-dimethylmorpholine seems to be the most advantageous.

The metal coat is usually formed by a layer of silver but can be formed by any metal that can form a reflective surface.

The protective coat is formed by protective synthetic paint but can be formed even by protective paint or powdered dye spraying.

The target is achieved by the method of the above given reflective product production: the metal coat is put into 0.05- to 15- minute contact with the solution that contains 0.00001 to 80 weight % of the agent consisting of the mixture of ions of bivalent tin and organic substance whose molecules contain at least one atom of nitrogen and/or sulphur, and 20 to 99.9999 weight % of demineralised water.

The solution with the agent is usually applied by immersion or spraying of the metal coat.

After the said period of time lapses, the solution with the agent is removed from the metal coat, preferably by washing or puffing off.

The protective layer is applied on the formed surface layer. The applied protective coat is - in most preferred situation - formed by a synthetic paint but it can also be formed by protective paint or powdered dye with subsequent polymerization, etc.

As some of the substances with suitable properties are relatively badly soluble in water, it is advantageous to prepare the agent's solution by dissolving the organic substance in a water-miscible organic solvent and the bivalent tin ions-containing substance is dissolved in demineralised water acidified by HCl. Subsequently, these solutions are mixed together. Demineralised water is then added to this mixture until required concentration is reached.

The above described method of production of antireflective product is suitable especially for production of mirrors but can also be used for jewellery and advertising articles production.

The coat can be applied on base material of any shape, e.g. on an object of art to reach a specific decorative effect but we think the invention will find the widest use if the coat is applied on a base material in form of a glass plate. Reflective coat can be as thin as transparent. Glass plates with transparent reflective coats are useful, among others, as plates for sun radiation screening or plates with low infra-red light emission. Alternatively, the coat can be fully reflective and form a mirror coat. Such mirror can be either flat or curved.

When the reflective product (for example a mirror silvered on it back side according to this invention) is produced, presence of the copper layer on the surface of the reflective layer is not as important as in classical methods of mirrors production. This brings an economic advantage as classical step of coppering is omitted, thus saving material and production time. It is surprising that contact of the silver layer with the treating solution that contains the above given agent and subsequent paint application can protect the silver layer against corrosion and abrasion as well as the classical copper layer which is provided with a lead-pigment-containing paint.

As compared to the existing known solutions, the reflective product and method of its production according to this invention are less expensive, do not require almost any washes, thus saving expensive demineralised water to a great extent and limiting contamination of waste water. At the same time, they enable the use of protective coats without lead pigment content. The use of the method of production described in this invention will enable to increase productivity of work and/or to extend the reaction zone of silver deposition on the mirrors production line, which will enable e.g. increase of the whole production line speed.

### Examples of application

The invention was tested in practice on the mirrors production line. The glass plate is moving on the line by a transport system with prescribed speed and passes through technological zones in which individual operations are carried out. After the glass plate is put on the line, it passes through the cleaning zone where its surface is cleaned from mechanical impurities and washed by demineralised water. In the next zone, tin dichloride solution is sprayed on the surface (surface sensitizing). After washing by demineralised water, metal is sprayed on the glass in the metal spraying zone.

Subsequently, the metal surface was treated by the following methods:

### Example No. 1

After the silvered glass plate passes through the metal spraying zone and half of the adhesion zone, it is washed by demineralised water and the solution containing 0.043 weight % of the agent and 99.957 weight % of demineralised water is sprayed on it for the period of 10 seconds.

The agent has the following composition: 6.397 weight % of benztriazole (C₆H₄NHN:N), 24.293 weight % of tin dichloride dihydrate (SnCl₂ × 2H₂O), 19.191 weight % isopropanole, 5.00 weight % of HCl, and 45.119 weight % of demineralised water.

The agent is prepared in the following way: benztriazole (C₆H₄NHN:N) is dissolved in isopropanole and tin dichloride dihydrate is dissolved in demineralised water acidified by HCl at first. These solutions are then mixed together.

The agent prepared in this way is diluted by demineralised water to the required concentration immediately before use and applied as described above.

After the glass plate passes through the adhesion zone, it is washed with demineralised water and dried and then it continues to the painting chamber where the protective layer formed by synthetic paint is applied.

In this case, results of corrosive tests of artificially accelerated aging showed equal properties as serial production samples. Results of the paint adhesion test were better in comparison with the serial production samples.

### Example No. 2

After the silvered glass plate passes through the metal spraying zone and half of the adhesion zone, it is washed by demineralised water and the solution containing 0.043 weight % of the agent and 99.957 weight % of demineralised water is sprayed on it for the period of 10 seconds.

The agent has the following composition: 6.397 weight % of benztriazole (C₆H₄NHN:N), 24.293 weight % of tin dichloride dihydrate (SnCl₂ 2H₂O), 19.191 weight % isopropanole, 5.00 weight % of HCl, and 45.119 weight % of demineralised water.

The agent is prepared in the following way: benztriazole (C₆H₄NHN:N) is dissolved in isopropanole and tin dichloride dihydrate is dissolved in demineralised water acidified by HCl at first. These solutions are then mixed together.

The agent prepared in this way is diluted by demineralised water to the required concentration immediately before use and applied as described above.

After the glass plate passes through the adhesion zone, the residues of the agent-containing solution are removed by air flow; the glass plate is dried and then it continues to the painting chamber where the protective layer formed by synthetic paint is applied.

In this case, results of corrosive tests of artificially accelerated aging showed equal properties as serial production samples. Results of the paint adhesion test were better in comparison with the serial production samples.

### Example No. 3

After the silvered glass plate passes through the metal spraying zone and half of the adhesion zone, it is washed by demineralised water and the solution containing 0.043 weight % of the agent and 99.957 weight % of demineralised water is sprayed on it for the period of 10 seconds.

The agent has the following composition: 6.397 weight % of phenidone, 24.293 weight % of tin dichloride dihydrate (SnCl₂ × 2H₂O), 19.191 weight % isopropanole, 5.00 weight % of HCl, and 45.119 weight % of demineralised water.

The agent is prepared in the following way: phenidone is dissolved in isopropanole and tin dichloride dihydrate is dissolved in demineralised water acidified by HCl at first. These solutions are then mixed together.

The agent prepared in this way is diluted by demineralised water to the required concentration immediately before use and applied as described above. After the glass plate passes through the adhesion zone, it is washed with demineralised water and dried and then it continues to the painting chamber where the protective layer formed by synthetic paint is applied.

In this case, results of corrosive tests of artificially accelerated aging showed equal properties as serial production samples. Results of the paint adhesion test were better in comparison with the serial production samples.

### Example No. 4

After the silvered glass plate passes through the metal spraying zone and half of the adhesion zone, it is washed by demineralised water and the solution containing 0.043 weight % of the agent and 99.957 weight % of demineralised water is sprayed on it for the period of 10 seconds.

The agent has the following composition: 6.397 weight % of N-dimethylmorpholine, 24.293 weight % of tin dichloride dihydrate (SnCl₂ × 2H₂O), 19.191 weight % of dipropylene glycol methyether, 5.00 weight % of HCl, and 45.119 weight % of demineralised water.

The agent is prepared in the following way: N-dimethylmorpholine is dissolved in dipropylene glycol methyether and tin dichloride dihydrate is dissolved in demineralised water acidified by HCl at first. These solutions are then mixed together.

The agent prepared in this way is diluted by demineralised water to the required concentration immediately before use and applied as described above. After the glass plate passes through the adhesion zone, it is washed with demineralised water and dried and then it continues to the painting chamber where the protective layer formed by synthetic paint is applied.

In this case, results of corrosive tests of artificially accelerated aging showed equal properties as serial production samples. Results of the paint adhesion test were better in comparison with the serial production samples.

### Industrial applicability

Mirrors but also jewellery and advertising articles can be the reflective products produced according to this invention.

## Claims

1. Reflective product, especially reflective product consisting of base material formed by glass or any other substrate and reflective-effect-forming metal coat, **characterized by that** the metal coat treated by a solution containing 0.00001 to 80 weight % of the agent which contains mixture of ions of bivalent tin and organic substance whose molecules contain at least one atom of nitrogen and/or sulphur, and 20 to 99.99999 weight % of demineralised water, is covered by a protective layer.

2. Reflective product according to point 1, **characterized by that** the metal coat is formed by silver layer.

3. Reflective product according to points 1 and 2, **characterized by that** the agent contains 20 to 60 weight % of bivalent tin ions-containing substance, 1 to 15 weight % of organic substance, 10 to 30 weight % of organic solvent, 1 to 20 weight % of HCl, and 4 to 78 weight % of demineralised water.

4. Reflective product according to some of the previous points, **characterized by that** the bivalent-tin-ions-containing substance is in form of chloride and/or sulphate.

5. Reflective product according to some of the previous points, **characterized by that** the organic substance is benztriazole C₆H₄NHN:N, or dicyclohexyl ammonium nitrite, or morpholine, or cyclohexylammonium carbonate, or phenidone, nor N-dimethylmorpholine, or ethylenediamine, or propylenediamine, or mercaptobenztriazole, or N-methylmorpholine.

6. Reflective product according to some of the previous points, **characterized by that** the protective layer is formed by synthetic paint.

7. Method of production of reflective product according to points 1 to 6, **characterized by that** the metal coat is put into a 0.05- to 15- minute contact with the solution that contains 0.00001 to 80 weight % of the agent consisting of the mixture of ions of bivalent tin and organic substance whose molecules contain at least one atom of nitrogen and/or sulphur, and 20 to 99.9999 weight % of demineralised water, and after this period, the solution is removed from the metal coat and a protective layer is applied on the obtained surface layer.

8. Method of production of reflective product according to points 7, **characterized by that** after the period of contact of the agent-containing solution with the metal coat expires, the solution is removed either by washing or by puffing off.

9. Method of production of reflective product according to points 7 and 8, **characterized by that** subsequently, a synthetic paint layer is applied.

10. Method of production of reflective product according to some of the previous points, **characterized by that** the agent-containing solution is prepared in the following way: the agent is prepared at first in which the organic substance is dissolved in a water-miscible organic solvent, then the bivalent-tin-ions-containing substance is dissolved in demineralised water acidified by HCl, these solutions are then mixed, and before application, demineralised water is added to the agent until required concentration is reached.
